# EUROPÄISCHE PATENTSCHRIFT

(11) **EP 1 611 365 B1**
(45) Veröffentlichungstag und Bekanntmachung des Hinweises auf die Patenterteilung: **08.08.2007**
(21) Anmeldenummer: 04721200.6
(22) Anmeldetag: 17.03.2004
(51) Int. Cl.: F16D 65/21, B60T 13/74, H02K 5/15

(54) **BETÄTIGUNGSEINHEIT FÜR EINE ELEKTROMECHANISCH BETÄTIGBARE SCHEIBENBREMSE**
ACTUATOR UNIT FOR AN ELECTROMECHANICALLY ACTUATABLE DISK BRAKE
UNITE DE COMMANDE POUR FREIN A DISQUE A ACTIONNEMENT ELECTROMECANIQUE

(30) Priorität: 18.03.2003 DE 10311745; 18.03.2003 DE 10311741
(43) Veröffentlichungstag der Anmeldung: 04.01.2006
(73) Patentinhaber: Continental Teves AG & Co. oHG, 60488 Frankfurt am Main (DE)
(72) Erfinder: HALASY-WIMMER, Georg, 71706 Markgröningen (DE); LINHOFF, Paul, 61267 Neu-Anspach (DE); SCHMITTNER, Bernhard, 63768 Hösbach (DE); VÖLKEL, Jürgen, 60486 Frankfurt (DE); MIESSNER, John, 12623 Berlin (DE)
(86) Internationale Anmeldenummer: PCT/EP2004/050321
(87) Internationale Veröffentlichungsnummer: WO 2004/083670

(56) Entgegenhaltungen:
- WO-A-00/61962
- WO-A-99/60285
- US-B1- 6 407 474

## Beschreibung

Die Erfindung betrifft eine Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe zusammenwirkende Reibbeläge begrenzt verschiebbar angeordnet sind, wobei einer der Reibbeläge mittels eines Betätigungselementes durch die Betätigungseinheit direkt und der andere Reibbelag durch die Wirkung einer vom Bremssattel aufgebrachten Reaktionskraft mit der Bremsscheibe in Eingriff bringbar ist, wobei die Betätigungseinheit aus einem Elektromotor, einem wirkungsmäßig zwischen dem Elektromotor und dem Betätigungselement angeordneten ersten Untersetzungsgetriebe sowie einem zwischen dem Elektromotor und einem Teil des ersten Untersetzungsgetriebes angeordneten zweiten Untersetzungsgetriebe besteht, und wobei der Betätigungseinheit eine elektronische Reglereinheit zugeordnet ist, die der Ansteuerung des Elektromotors dient.

Eine derartige elektromechanische Betätigungseinheit ist aus der internationalen Patentanmeldung WO 00/61962 bekannt. Bei der vorbekannten Betätigungseinheit ist die elektronische Reglereinheit auf eine nicht erwähnte Art baulich getrennt von der Betätigungseinheit angeordnet.

Als nachteilig wird bei der vorbekannten Betätigungseinheit insbesondere die Tatsache empfunden, dass, um sämtliche Funktionen (Betriebs- sowie Feststellbremsungen) zu erfüllen, elektrische Leitungen mit großen Querschnitten erforderlich sind, um die erforderlichen elektrischen Leistungen bzw. Ströme zu übertragen, so dass die Strecke zwischen der Betätigungseinheit und der zugeordneten elektronischen Reglereinheit, insbesondere bei der Verwendung eines bürstenlosen Elektromotors, als kritisch angesehen wird. Die getrennte Anordnung der genannten Komponenten verursacht auch erhebliche Probleme beim Packaging.

Es ist daher Aufgabe der vorliegenden Erfindung, eine elektromechanische Betätigungseinheit der eingangs genannten Gattung vorzuschlagen, bei der die Strecke zwischen der Betätigungseinheit und der zugeordneten elektronischen Reglereinheit wesentlich verkürzt werden kann und die hinsichtlich des Packaging eine optimale Gestaltung aufweist.

Diese Aufgabe wird erfindungsgemäß dadurch gelöst, dass die elektronische Reglereinheit zumindest teilweise zwischen dem Elektromotor und einem das zweite Untersetzungsgetriebe aufnehmenden Gehäuse angeordnet ist.

Vorteilhafte Weiterbildungen des Erfindungsgegenstandes sind den Unteransprüchen 2 bis 16 zu entnehmen.

Die Erfindung wird in der nachfolgenden Beschreibung eines Ausführungsbeispiels unter Bezugnahme auf die beiliegende Zeichnung näher erläutert. In der Zeichnung zeigt:
- Fig. 1: eine Ausführung der erfindungsgemäßen, elektromechanischen Betätigungseinheit im Axialschnitt,
- Fig. 2: eine Teilschnittdarstellung einer ersten Variante der erfindungsgemäßen, elektromechanischen Betätigungseinheit und
- Fig. 3: eine Teilschnittdarstellung einer zweiten Variante der erfindungsgemäßen, elektromechanischen Betätigungseinheit.

Die in der Zeichnung dargestellte, elektromechanische Betätigungseinheit nach der Erfindung dient der Betätigung einer Schwimmsattel-Scheibenbremse, deren lediglich schematisch angedeuteter Bremssattel in einem nicht gezeigten feststehenden Halter verschiebbar gelagert ist. Ein Paar von Reibbelägen 4 und 5 ist im Bremssattel derart angeordnet, dass sie der linken und der rechten Seitenfläche einer Bremsscheibe 6 zugewandt sind.

Nachstehend wird der in der Zeichnung rechts gezeigte Reibbelag 4 als erster Reibbelag und der andere, mit 5 bezeichnete Reibbelag als zweiter Reibbelag bezeichnet. Während der erste Reibbelag 4 mittels eines Betätigungselements 7 durch die Betätigungseinheit direkt mit der Bremsscheibe 6 in Eingriff bringbar ist, wird der zweite Reibbelag 5 durch die Wirkung einer bei der Betätigung der Anordnung vom Bremssattel aufgebrachten Reaktionskraft gegen die gegenüberliegende Seitenfläche der Bremsscheibe 6 gedrückt. Die erfindungsgemäße Betätigungseinheit, die mittels nicht gezeigter Befestigungsmittel am Bremssattel angebracht ist, weist einen modularen Aufbau auf und besteht im wesentlichen aus vier selbständigen Baugruppen bzw. Modulen, und zwar aus einer Antriebseinheit 1, einem den ersten Reibbelag 4 betätigenden ersten Untersetzungsgetriebe 2, einem zwischen der Antriebseinheit 1 und dem ersten Untersetzungsgetriebe 2 wirkungsmäßig geschalteten zweiten Untersetzungsgetriebe 3 sowie einer elektronischen Reglereinheit 8.

Die vorhin erwähnte Antriebseinheit 1 besteht aus einem Elektromotor 11, der im dargestellten Beispiel als ein permanentmagneterregter, elektronisch kommutierter Motor ausgebildet ist, dessen Stator 9 unbeweglich in einem Motorgehäuse 12 angeordnet ist und dessen Rotor 10 mit einer Welle 13 verbunden ist, die mit dem zweiten Untersetzungsgetriebe 3 wirkungsmäßig verbunden ist. Das erste Untersetzungsgetriebe 2 ist im gezeigten Beispiel als ein Kugelgewindetrieb ausgebildet ist, das in einem Getriebegehäuse 14 angeordnet ist, das auch einteilig mit dem vorhin erwähnten Bremssattel ausgeführt sein kann. Der Kugelgewindetrieb besteht dabei aus einer Gewindemutter 16 sowie einer Gewindespindel 17, wobei zwischen der Gewindemutter 16 und der Gewindespindel 17 mehrere, nicht näher bezeichnete Kugeln angeordnet sind, die bei einer Rotationsbewegung der Gewindespindel 17 umlaufen und die Gewindemutter 16 in eine axiale bzw. translatorische Bewegung versetzen. Die Gewindemutter 16 ist dabei vorzugsweise zweiteilig ausgeführt und besteht aus einem ersten Teil 18, das das vorhin erwähnte Betätigungselement 7 bildet, sowie einem zweiten Teil 19, in dem ein Rücklaufbereich für die Kugeln ausgebildet ist, in dem die Kugeln ohne Belastung an den Anfang der tragenden Laufbahn zurücklaufen können. Außerdem ist der Zeichnung zu entnehmen, dass das zweite Untersetzungsgetriebe 3 als ein Planetengetriebe ausgebildet ist.

Die Anordnung ist dabei vorzugsweise derart getroffen, dass der Rotor 10 bzw. die Welle 13 des Elektromotors 11 unter Zwischenschaltung des zweiten Untersetzungsgetriebes 3 die Gewindespindel 17 antreibt, während das erste Teil 18 der Gewindemutter 16 sich am ersten Reibbelag 4 abstützt. Die Ankopplung des ersten Untersetzungsgetriebes 2 an das zweite Untersetzungsgetriebe 3 erfolgt mittels einer momentenfreien Steckverbindung, die das Bezugszeichen 20 trägt und die beispielsweise als eine Kerbverzahnung ausgeführt werden kann. Der Lagerung des Rotors 10 dienen zwei Radiallager 21, 22, die im Motorgehäuse 12 angeordnet sind.

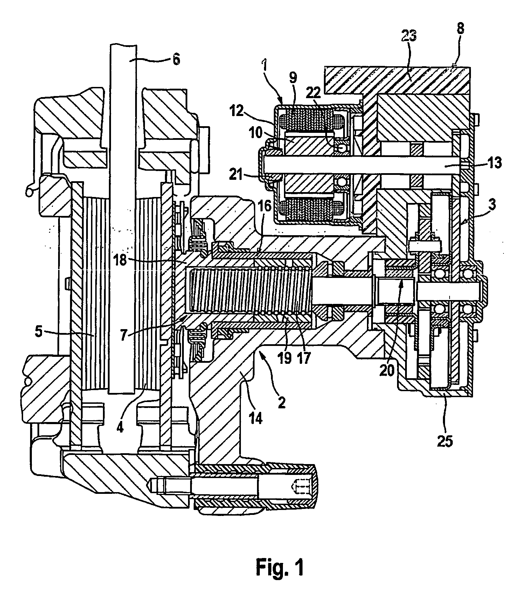

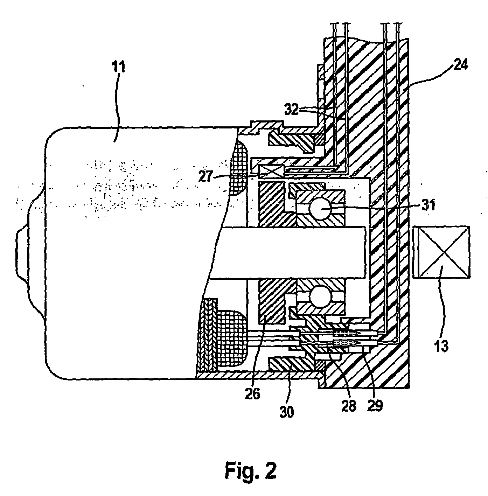

Wie weiterhin der Fig. 1 zu entnehmen ist, weist die elektronische Reglereinheit 8 ein vorzugsweise aus Kunststoff bestehendes Gehäuse 23 auf, das mit einem Flansch 24 versehen, der, wie insbesondere Fig. 2 darstellt, sämtliche elektrischen Schnittstellen zwischen dem Elektromotor 11 und der elektronischen Reglereinheit 8 sowie mechanische Schnittstellen zwischen dem Elektromotor 11 und dem zweiten Untersetzungsgetriebe 3 aufnimmt. Der Flansch 24 ist vorteilhaft zwischen dem Elektromotor 11 und einem das zweite Untersetzungsgetriebe 3 aufnehmenden Gehäuse 25 angeordnet. Ein nicht näher dargestelltes Lageerkennungssystem dient der Ermittlung der aktuellen Position des Rotors 10.

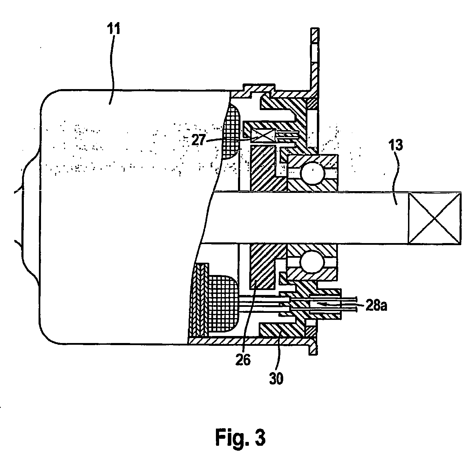

Wie insbesondere den Fig. 2 und 3 zu entnehmen ist, wird das Lageerkennungssystem im wesentlichen durch ein auf der Welle 13 angeordnetes Encoderrad 26 sowie ein Sensorelement 27 gebildet. Als das Sensorelement 27 kann beispielsweise ein Hallsensor oder ein magnetoresistives Element verwendet werden. Bei der in Fig. 2 gezeigten Ausführung ist das Sensorelement 27 mit dem Gehäuse 23 der elektronischen Reglereinheit 8 bzw. seinem Flansch 24 fest verbunden. Bei einer anderen, nicht dargestellten Ausführung ist das Sensorelement gegenüber dem Gehäuse der elektronischen Reglereinheit begrenzt beweglich angeordnet und mit ihm mittels einer elastischen Anbindung verbunden. Die vorhin erwähnte elektrische Schnittstelle zwischen dem Elektromotor 11 und der elektronischen Reglereinheit 8, die der Stromversorgung des Elektromotors 11 dient, ist im dargestellten Beispiel als eine Steckverbindung 28, 29 ausgebildet. Dabei ist der Stecker bzw. das Einsteckteil 28 dem Elektromotor 11 zugeordnet und als Bestandteil eines Lagerschildes 30 ausgebildet, das ein der Lagerung der Welle 13 dienendes Lager 31 aufnimmt. Dagegen ist die Kontaktbuchse bzw. das Aufnahmeteil 29 der elektronischen Reglereinheit 8 zugeordnet und als Bestandteil des Flansches 24 ausgebildet, vorzugsweise am Flansch 24 angeformt. Die das Sensorelement 27 mit weiteren Komponenten der elektronischen Reglereinheit 8 verbindenden elektrischen Leitungen 32 sind im Kunststoff eingebettet, aus dem das Gehäuse 23 der elektronischen Reglereinheit 8 besteht.

Bei der in Fig. 3 gezeigten Ausführungsvariante ist das Sensorelement 27 in dem vorhin erwähnten Lagerschild 30 integriert. Der Stecker bzw. das Einsteckteil 28a dient außer der Stromversorgung des Elektromotors 11 gleichzeitig der Kontaktierung des Sensorelementes 27.

Im Rahmen der vorliegenden Erfindung sind selbstverständlich auch zahlreiche Modifikationen denkbar. So kann z. B. der als Antriebseinheit 1 dienende Elektromotor als ein geschalteter Reluktanzmotor (SR-Motor) ausgeführt werden. Vorstellbar sind auch andere Ausführungen des Planetengetriebes, wie etwa ein zweistufiges Differenzplanetengetriebe oder ein Getriebe, dessen Planetenräder mit ihrer ersten Stufe mit einem Sonnenrad und mit ihrer zweiten Stufe unter

Zwischenschaltung je eines Stirnrades mit einem Hohlrad im Eingriff stehen. Denkbar sind selbstverständlich auch Getriebe, die mittels eines verformbaren, gezahnten Ringes und einer Exzentrizität große Untersetzungen erzielen.

### Bezugszeichenliste

- 1: Antriebseinheit
- 2: Untersetzungsgetriebe
- 3: Untersetzungsgetriebe
- 4: Reibbelag
- 5: Reibbelag
- 6: Bremsscheibe
- 7: Betätigungselement
- 8: Reglereinheit
- 9: Stator
- 10: Rotor
- 11: Elektromotor
- 12: Motorgehäuse
- 13: Welle
- 14: Getriebegehäuse
- 15:
- 16: Gewindemutter
- 17: Gewindespindel
- 18: Teil
- 19: Teil
- 20: Steckverbindung
- 21: Radiallager
- 22: Radiallager
- 23: Gehäuse
- 24: Flansch
- 25: Getriebegehäuse
- 26: Encoderrad
- 27: Sensorelement
- 28: Stecker
- 29: Buchse
- 30: Lagerschild
- 31: Lager

## Patentansprüche

1. Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe (6) zusammenwirkende Reibbeläge (4,5) begrenzt verschiebbar angeordnet sind, wobei einer (4) der Reibbeläge (4,5) mittels eines Betätigungselementes (7) durch die Betätigungseinheit direkt und der andere Reibbelag (5) durch die Wirkung einer vom Bremssattel aufgebrachten Reaktionskraft mit der Bremsscheibe (6) in Eingriff bringbar ist, wobei die Betätigungseinheit aus einem Elektromotor (11), einem wirkungsmäßig zwischen dem Elektromotor (11) und dem Betätigungselement (7) angeordneten ersten Untersetzungsgetriebe (2) sowie einem zwischen dem Elektromotor (11) und einem Teil des ersten Untersetzungsgetriebes (2) angeordneten zweiten Untersetzungsgetriebe (3) besteht, und wobei der Betätigungseinheit eine elektronische Reglereinheit (8) zugeordnet ist, die der Ansteuerung des Elektromotors (11) dient, **dadurch gekennzeichnet, dass** die elektronische Reglereinheit (8) zumindest teilweise zwischen dem Elektromotor (11) und einem das zweite Untersetzungsgetriebe (3) aufnehmenden Gehäuse (25) angeordnet ist.

2. Betätigungseinheit nach Anspruch 1 **dadurch gekennzeichnet, dass** die elektronische Reglereinheit (8) ein vorzugsweise aus Kunststoff bestehendes Gehäuse (23) mit einem Flansch (24) aufweist, der zwischen dem Elektromotor (11) und dem das zweite Untersetzungsgetriebe (3) aufnehmenden Gehäuse (25) angeordnet ist und der sämtliche elektrische Schnittstellen zwischen dem Elektromotor (11) und der elektronischen Reglereinheit (8) sowie mechanische Schnittstellen zwischen dem Elektromotor (11) und dem zweiten Untersetzungsgetriebe (3) aufnimmt.

3. Betätigungseinheit nach Anspruch 2 **dadurch gekennzeichnet, dass** die elektrische Schnittstelle zwischen dem Elektromotor (11) und der elektronischen Reglereinheit (8) als eine Steckverbindung (28, 29) ausgebildet ist.

4. Betätigungseinheit nach Anspruch 3 **dadurch gekennzeichnet, dass** die elektrische Schnittstelle (28, 29) der Stromversorgung des Elektromotors (11) dient.

5. Betätigungseinheit nach Anspruch 3 oder 4 **dadurch gekennzeichnet, dass** der Stecker bzw. das Einsteckteil (28) dem Elektromotor (11) zugeordnet ist, während die Kontaktbuchse bzw. das Aufnahmeteil (29) der elektronischen Reglereinheit (8) zugeordnet ist.

6. Betätigungseinheit nach Anspruch 5, **dadurch gekennzeichnet, dass** die Kontaktbuchse bzw. das Aufnahmeteil (29) am Flansch (24) angeformt ist.

7. Betätigungseinheit nach einem der Ansprüche 1 bis 6 **dadurch gekennzeichnet, dass** der Elektromotor (11) als ein bürstenloser, elektronisch kommutierter Gleichstrommotor ausgeführt ist und das Mittel (26, 27) zum Sensieren der Rotorlage des Elektromotors (11) vorgesehen sind.

8. Betätigungseinheit nach Anspruch 7, **dadurch gekennzeichnet, dass** die Mittel (26, 27) zum Sensieren der Rotorlage des Elektromotors (11) durch ein auf der Welle (13) des Elektromotors (11) angeordnetes Encoderrad (26) sowie ein mit dem Encoderrad (26) zusammenwirkendes Sensorelement (27) gebildet sind.

9. Betätigungseinheit nach Anspruch 8, **dadurch gekennzeichnet, dass** das Sensorelement (27) mit dem Gehäuse (23) der elektronischen Reglereinheit (8) bzw. dem Flansch (24) fest verbunden ist.

10. Betätigungseinheit nach Anspruch 8, **dadurch gekennzeichnet, dass** das Sensorelement (27) gegenüber dem Gehäuse (23) der elektronischen Reglereinheit (8) begrenzt beweglich angeordnet und mit ihm mittels einer elastischen Anbindung verbunden ist.

11. Betätigungseinheit nach Anspruch 8 **dadurch gekennzeichnet, dass** das Sensorelement (27) an einem Lagerschild (30) angeordnet ist, das den Elektromotor (11) verschließt, den Stecker (28) trägt und der Lagerung der Welle (13) des Elektromotors (11) dient.

12. Betätigungseinheit nach Anspruch 11 **dadurch gekennzeichnet, dass** der Stecker (28) der Kontaktierung des Sensorelementes (27) dient.

13. Betätigungseinheit nach einem der vorhergehenden Ansprüche **dadurch gekennzeichnet, dass** zwischen dem ersten (2) und dem zweiten Untersetzungsgetriebe (3) eine momentenfreie Steckverbindung (20), beispielsweise mittels einer Kerbverzahnung, vorgesehen ist.

14. Betätigungseinheit nach Anspruch 13 **dadurch gekennzeichnet, dass** die Steckverbindung (20) am Ende des Antriebselementes (Spindel) (17) des ersten Untersetzungsgetriebes (2) ausgebildet ist.

15. Betätigungseinheit nach einem der vorhergehenden Ansprüche **dadurch gekennzeichnet, dass** der Elektromotor (11) sowie ein Teil des zweiten Untersetzungsgetriebes (3) gegenüber der Längsachse des ersten Untersetzungsgetriebes (2) radial versetzt angeordnet sind.

16. Betätigungseinheit nach Anspruch 15 **dadurch gekennzeichnet, dass** der Elektromotor (11) sowie ein Teil des zweiten Untersetzungsgetriebes (3) achsparallel zur Längsachse des ersten Untersetzungsgetriebes (2) angeordnet sind.

17. Betätigungseinheit nach einem der vorhergehenden Ansprüche **dadurch gekennzeichnet, dass** zwischen dem ersten Getriebe und dem zweiten Getriebe eine zusätzliche elektrische Schnittstelle vorgesehen ist, die der elektrischen Verbindung eines im ersten Getriebe angeordneten Kraftmesselement und der elektronischen Reglereinheit dient.

18. Betätigungseinheit nach Anspruch 17 **dadurch gekennzeichnet, dass** die Schnittstelle der zusätzlichen mechanischen Befestigung der elektronischen Reglereinheit am Bremssattel dient.

## Claims

1. Actuating unit for an electromechanically actuatable disc brake for motor vehicles mounted on a brake caliper, two friction linings (4, 5) being mounted in the caliper with freedom to move within a limited range, each of which works together with one of the lateral surfaces of a brake disc (6), wherein an actuating element (7) of the actuating unit brings one (4) of the friction linings (4, 5) into engagement with the brake disc (6) directly, whereas the other friction lining (5) is brought into engagement with the brake disc (6) through the action of a reaction force applied by the brake caliper, wherein the actuating unit consists of an electric motor (11); a first reducing gear (2), which acts between the electric motor (11) and the actuating element (7); and a second reducing gear (3), which is arranged between the electric motor (11) and a part of the first reducing gear (2), and wherein an electronic controller (8), which serves to drive the electric motor (11), is assigned to the actuating unit, **characterized in that** at least part of the electronic controller (8) is mounted between the electric motor (11) and a housing (25) which accommodates the second reducing gear (3).

2. Actuating unit according to Claim 1, **characterized in that** the electronic controller (8) has a housing (23), preferably made of plastic, with a flange (24), which is mounted between the electric motor (11) and the housing (25) for the second reducing gear (3) and accommodates all of the electrical interfaces between the electric motor (11) and the electronic controller (8) and the mechanical interfaces between the electric motor (11) and the second reducing gear (3).

3. Actuating unit according to Claim 2, **characterized in that** the electrical interface between the electric motor (11) and the electronic controller (8) is designed as a plug-and-socket connection (28, 29).

4. Actuating unit according to Claim 3, **characterized in that** the electrical interface (28, 29) serves to supply power to the electric motor (11).

5. Actuating unit according to Claim 3 or Claim 4, **characterized in that** the plug or male part (28) is assigned to the electric motor (11), whereas the socket or female part (29) is assigned to the electronic controller (8).

6. Actuating unit according to Claim 5, **characterized in that** the socket or female part (29) is molded into the flange (24).

7. Actuating unit according to one of Claims 1 to 6, **characterized in that** the electric motor (11) is designed as a brushless, electronically commutated direct-current motor, and **in that** means (26, 27) are provided for sensing the position of the rotor of the electric motor (11).

8. Actuating unit according to Claim 7, **characterized in that** the means (26, 27) for sensing the position of the rotor of the electric motor (11) consist of an encoder wheel (26) mounted on the shaft (13) of the electric motor (11) and a sensor element (27), which cooperates with the encoder wheel (26).

9. Actuating unit according to Claim 8, **characterized in that** the sensor element (27) is permanently connected to the housing (23) of the electronic controller (8), i.e., to its flange (24).

10. Actuating unit according to Claim 8, **characterized in that** the sensor element (27) is mounted with a certain limited freedom of movement with respect to the housing (23) of the electronic controller (8) and is connected to it by means of an elastic fastening.

11. Actuating unit according to Claim 8, **characterized in that** the sensor element (27) is mounted on an end plate (30), which closes off the electric motor (11), carries the plug (28), and serves to support the shaft (13) of the electric motor (11).

12. Actuating unit according to Claim 11, **characterized in that** the plug (28) serves as an electrical contact for the sensor element (27).

13. Actuating unit according to one of the preceding claims, **characterized in that** a torque-free plug-in connection (20), such as that achieved by means of serrations, for example, is provided between the first (2) and the second reducing gear (3).

14. Actuating unit according to Claim 13, **characterized in that** the plug-in connection (20) is designed at the end of the drive element (spindle) (17) of the first reducing gear (2).

15. Actuating unit according to one of the preceding claims, **characterized in that** the electric motor (11) and a part of the second reducing gear (3) are radially offset from the longitudinal axis of the first reducing gear (2).

16. Actuating unit according to Claim 15, **characterized in that** the electric motor (11) and a part of the second reducing gear (3) are axially parallel to the longitudinal axis of the first reducing gear (2).

17. Actuating unit according to one of the preceding claims, **characterized in that** an additional electrical interface is provided between the first gear and the second gear to connect electrically a force-measuring element mounted in the first gear to the electronic controller.

18. Actuating unit according to Claim 17, **characterized in that** the interface serves the additional purpose of fastening the electronic controller mechanically to the brake caliper.

## Revendications

1. Unité de commande pour un frein à disque actionnable électromécaniquement pour véhicules automobiles qui est agencée sur un étrier de frein, dans lequel deux garnitures (4, 5) sont agencées avec une liberté de se déplacer dans un domaine limité, chacune agissant conjointement avec l'une des surfaces latérales d'un disque de frein (6), dans laquelle au moyen d'un élément d'actionnement (7) de l'unité de commande l'une (4) des garnitures (4, 5) peut être mise en prise avec le disque de frein (6) directement, et l'autre garniture (5) peut être mise en prise avec le disque de frein (6) indirectement grâce à l'action d'une force de réaction appliquée par l'étrier de frein, où l'unité de commande est constituée d'un moteur électrique (11), un premier engrenage réducteur (2), agencé de manière fonctionnelle entre le moteur électrique (11) et l'élément d'actionnement (7) et un deuxième engrenage réducteur (3) agencé entre le moteur électrique (11) et une partie du premier engrenage réducteur (2), et où une unité de régulation électronique (8), qui sert à entraîner le moteur électrique (11), est également attribuée à l'unité de commande,
**caractérisée en ce que** l'unité de régulation électronique (8) est agencée au moins en partie entre le moteur électrique (11) et un logement (25) qui maintient le deuxième engrenage réducteur (3).

2. Unité de commande selon la revendication 1, **caractérisée en ce que** l'unité de régulation électronique (8) présente un logement (23) composé de préférence en matière plastique avec une bride (24), agencée entre le moteur électrique (11) et qui est le logement de réception (25) du deuxième engrenage réducteur (3) et qui contient toutes les interfaces électriques entre le moteur électrique (11) ainsi que l'unité de régulation électronique (8) et les interfaces mécaniques entre le moteur électrique (11) et le deuxième engrenage réducteur (3).

3. Unité de commande selon la revendication 2, **caractérisée en ce que** l'interface électrique entre le moteur électrique (11) et l'unité de régulation électronique (8) est conçue comme un raccord avec contacts mâle et femelle (28, 29).

4. Unité de commande selon la revendication 3, **caractérisée en ce que** l'interface électrique (28, 29) sert d'alimentation électrique du moteur électrique (11).

5. Unité de commande selon la revendication 3 ou 4, **caractérisée en ce que** le connecteur ou partie mâle (28) est attribué au moteur électrique (11), alors que la prise ou partie femelle (29) est attribuée au contrôleur électronique (8).

6. Unité de commande selon la revendication 5, **caractérisée en ce que** la prise ou partie femelle (29) est moulée dans la bride (24).

7. Unité de commande selon la revendication 1 à 6, **caractérisée en ce que** le moteur électrique (11) est conçu comme un moteur à courant continu commuté électroniquement sans balai, et **en ce que** des moyens (26, 27) sont prévus pour détecter la position du rotor du moteur électrique (11).

8. Unité de commande selon la revendication 7, **caractérisée en ce que** les moyens (26, 27) pour détecter la position du rotor du moteur électrique (11) sont formés d'une roue de codage (26) agencée sur l'arbre (13) du moteur électrique (11) ainsi qu'un élément de capteur (27) coopérant avec la roue de codage (26).

9. Unité de commande selon la revendication 8, **caractérisée en ce que** l'élément de capteur (27) est relié de manière fixe au logement (23) du contrôleur électronique (8) ou de la bride.

10. Unité de commande selon la revendication 8, **caractérisée en ce que** l'élément de capteur (27) est agencé avec une certaine liberté de mouvement limitée par rapport au logement (23) du contrôleur électronique (8) et est relié à celui-ci au moyen d'une fixation élastique.

11. Unité de commande selon la revendication 8, **caractérisée en ce que** l'élément de capteur (27) est agencé sur un flasque (30), qui ferme le moteur électrique (11), supporte un connecteur électrique (28) et sert de support à l'arbre (13) du moteur électrique (11).

12. Unité de commande selon la revendication 11, **caractérisée en ce que** le connecteur (28) sert de contact électrique pour l'élément de capteur (27).

13. Unité de commande selon l'une quelconque des revendications précédentes, **caractérisée en ce qu'**un raccord enfichable sans couple (20), par exemple au moyen d'un engrenage denté, est prévu entre le premier (2) et le deuxième engrenage réducteur (3).

14. Unité de commande selon la revendication 13, **caractérisée en ce que** le raccord enfichable (20) est réalisé à l'extrémité de l'élément d'entraînement (tige) (17) du premier engrenage (2).

15. Unité de commande selon l'une quelconque des revendications précédentes, **caractérisée en ce que** le moteur électrique (11) ainsi qu'une partie du deuxième engrenage réducteur (3) sont agencés de manière décalée radialement par rapport à l'axe longitudinal du premier engrenage réducteur (2).

16. Unité de commande selon la revendication 15, **caractérisée en ce que** le moteur électrique (11) ainsi qu'une partie du deuxième engrenage réducteur (3) sont agencés de manière parallèle axialement à l'axe longitudinal du premier engrenage réducteur (2).

17. Unité de commande selon l'une quelconque des revendications précédentes, **caractérisée en ce qu'**une interface électrique supplémentaire est prévue entre le premier engrenage et le deuxième engrenage, qui sert de liaison électrique entre un élément de détection de force agencé dans le premier engrenage et l'unité de régulation électronique.

18. Unité de commande selon la revendication 17, **caractérisée en ce que** l'interface sert également de fonction supplémentaire de fixation du contrôleur électronique mécaniquement à l'étrier de frein.
